(19) Europäisches Patentamt

European Patent Office

Office européen des brevets

(11) **EP 0 822 721 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.⁷: **H04N 7/173**, H04B 3/54, H04B 7/216

(21) Anmeldenummer: **97112723.8**

(22) Anmeldetag: **24.07.1997**

(54) **Teilnehmerendgeräte-Anschlusssystem für interaktive Telekommunikationsdienste**

Subscriber terminal connecting system for interactive telecommunication services

Système de connexion d'un terminal d'abonné pour services de télécommunication interactif

(84) Benannte Vertragsstaaten:
**CH DE FI FR GB IT LI NL SE**

(30) Priorität: **02.08.1996 DE 19631360**

(43) Veröffentlichungstag der Anmeldung:
**04.02.1998 Patentblatt 1998/06**

(73) Patentinhaber: **SIEMENS AKTIENGESELLSCHAFT 80333 München (DE)**

(72) Erfinder: **Möhrmann, Karl Heinz, Dipl.-Ing. 81369 München (DE)**

(56) Entgegenhaltungen:
WO-A-94/03989          US-A- 5 319 634
US-A- 5 481 249

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

In der modernen Telekommunikationstechnik erwartet die Teilnehmer ein vielfältiges Diensteangebot von konventioneller Telefonie und TV-Signalverteilung bis zu interaktiven Breitband-Telekommunikationsdiensten, deren Signale zu den Teilnehmern hin bzw. von diesen weg über entsprechend ausgebaute Teilnehmer-Anschlußnetze geführt werden (Int. J. of Communication Systems, Vol.8, 267-274 (1995)). Für diensteintegrierende Netze wird dabei davon ausgegangen, daß das öffentliche Teilnehmer-Anschlußnetz teilnehmerseitig mit einer Netzabschlußeinrichtung (Network Termination NT) abgeschlossen ist; mit dieser Netzabschlußeinrichtung sind dann die (abgesetzten) Teilnehmer-Endgeräte (z.B. Telefon, PC, Set-Top Box mit TV-Empfänger usw.) über entsprechende Leitungen verbunden. Hierfür können gegebenenfalls bereits vorhandene Leitungen verwendet werden; häufig sind aber geeignete Leitungen nicht oder nicht im erforderlichen Umfang vorhanden, so dass eine u.U. aufwendige und kostspielige Neuverlegung von Leitungen im Haus oder Gebäude des Teilnehmers erforderlich wird. Aber auch bei vorhandenem Leitungsnetz ist die Flexibilität begrenzt: Telekommunikations-Endgeräte können nicht an beliebigen Stellen betrieben werden, sondern nur in der Nähe einer geeigneten Anschlußdose. So mag eine HF-Buchse an einer koaxialen Antennenleitung zwar den Anschluß eines TV-Empfängers ermöglichen, ohne dass aber auch ein an einem anderen Aufstellort oder in einem anderen Zimmer betriebener PC an diese Buchse und damit an das koaxiale Hausleitungsnetz angeschlossen werden kann.

Man kann davon ausgehen, daß als nahezu universell verbreitetes Leitungsnetz das 230V(bzw. 110V)-Stromversorgungsnetz bei jedem Teilnehmer vorhanden und über die üblichen Steckdosen in allen Räumlichkeiten zugänglich ist, jedenfalls aber dort, wo sich moderne Telekommunikations-Endgeräte befinden, die in der Regel ohnehin einen Anschluß an das Stromversorgungsnetz benötigen. In diesem Zusammenhang ist für interaktive Dienste mit schmalbandigem Rückkanal (wie z.B. Video-Abrufdienste) zur Übertragung der Rückkanalsignale im Teilnehmerbereich die Benutzung des lokalen Lichtnetzes bekannt (DE 43 42 775 A1); alternativ kann man hierfür auch ein schnurloses Telefon verwenden (DE 43 42 776 A1). Eine zusätzliche Übertragung von Datensignalen mit höheren Datenraten, wie sie beispielsweise für "Teleworking" benötigt würden, ist dabei allerdings nicht möglich.

An ein typisches Hausnetz werden sich aber Anforderungen stellen wie beispielsweise:

-    bis zu 4 von der Netzabschlußeinrichtung NT zu den Endeinrichtungen führende Abwärtskanäle mit einer Kapazität von jeweils -< 4 Mbit/s (4 Mbit/s für Video-Verteildienste bzw. 2 Mbit/s für symmetrische Dienste),

-    eine entsprechende Zahl von Aufwärtskanälen mit einer Kapazität von jeweils ≤ 64 kbit/s (für unsymmetrische Dienste wie Videoabruf) oder 2 Mbit/s (für symmetrische Dienste),

und der Erfindung liegt die Aufgabe zugrunde, ein hierfür geeignetes Teilnehmerendgeräte-Anschlußsystem zu schaffen.

Die Erfindung betrifft ein Teilnehmerendgeräte-Anschlußsystem mit einer das Teilnehmeranschlußnetz teilnehmerseitig abschliessenden Netzabschlußeinheit [Network Termination NT] und daran angeschlossenen Endgeräten für interaktive Telekommunikationsdienste; dieses Teilnehmerendgeräte-Anschlußsystem ist erfindungsgemäß dadurch gekennzeichnet, dass zur Breitbandsignalübertragung von der Netzabschlußeinrichtung zu einem entsprechenden Endgerät hin und ggf. zur Breitbandsignalübertragung von einem entsprechenden Endgerät zur Netzabschlußeinrichtung hin Breitband-Funkkanäle in Form von CDMA-Kanälen vorgesehen sind, wobei die zur Decodierung des CDMA-Signals benötigte Information über den jeweils benutzten Code in einem zur Steuerinformationsübertragung zwischen Netzabschlußeinrichtung und Endgerät vorgesehenen bidirektionalen Schmalband-Leitungskanal im lokalen Stromversorgungsnetz übertragen wird.

Die Erfindung ermöglicht vorteilhafterweise eine einfache, vom Vorhandensein einer geeigneten Verkabelung unabhängige und kostengünstige Realisierung eines Teilnehmerendgeräte-Anschlußsystems zur Übertragung hochratiger Datensignale ohne jegliche Neuverkabelung bei nahezu beliebig hoher Flexibilität bezüglich des Aufstellortes des Endgerätes, wobei ein symmetrischer Betrieb (in beiden Übertragungsrichtungen gleich hohe Datenrate) möglich ist.

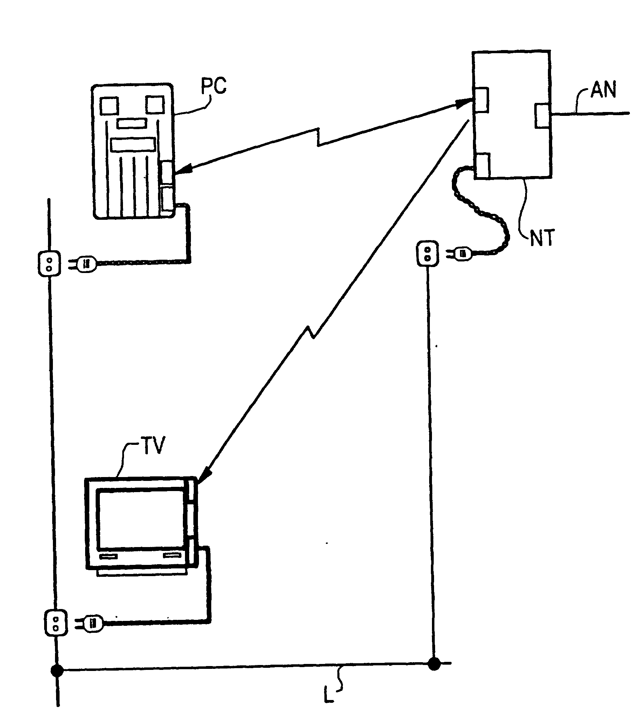

Weitere Besonderheiten der Erfindung werden aus der nachfolgenden näheren Erläuterung an Hand der Zeichnung ersichtlich.

In der Zeichnung ist schematisch in einem zum Verständnis der Erfindung erforderlichem Umfang ein Ausführungsbeispiel eines Teilnehmerendgeräte-Anschlußsystems gemäß der Erfindung dargestellt. Dieses Teilnehmerendgeräte-Anschlußsystem weist eine das Teilnehmeranschlußnetz AN teilnehmerseitig abschliessende Netzabschlußeinheit (Network Termination) NT und daran angeschlossene Endgeräte für interaktive Telekommunikationsdienste auf. Solche Endgeräte können im einfachsten Fall Telefonapparate sein, ohne dass dies in der Zeichnung näher dargestellt ist. Statt solcher Teilnehmerendgeräte für Schmalband-Telekommunikationsdienste oder auch zusätzlich dazu sind in dem in der Zeichnung skizzierten Teilnehmerendgeräte-Anschlußsystem Endgeräte für unidirektionale oder auch bidirektionale Breitbanddienste vorgesehen, nämlich als Beispiel für einen unidirektionalen Breitbandsignalempfänger ein Videogerät TV und als Beispiel für ein bidirektional mit Breitbandsignalen arbeitendes Gerät ein Personal Computer PC, der über das Teilnehmeranschlussnetz AN mit anderen Computern vernetzt sein möge, ohne dass dies in der Zeichnung näher dargestellt ist.

Zur Breitbandsignalübertragung von der Netzabschlußeinrichtung NT zu einem solchen Endgerät, beispielsweise zum Videogerät TV, ist nun, wie dies auch in der Zeichnung angedeutet ist, ein Breitband-Funkkanal vorgesehen und zur Steuerinformationsübertragung zwischen Netzabschlußeinrichtung NT und Endgerät ein bidirektionaler Schmalband-Leitungskanal im lokalen Stromversorgungsnetz L (häusliches Lichtnetz). In entsprechender Weise ist auch zur Breitbandsignalübertragung von der Netzabschlußeinrichtung NT zu dem bidirektional mit Breitbandsignalen arbeitenden Personal Computer PC ein Breitband-Funkkanal vorgesehen; ausserdem ist aber auch, wie dies ebenfalls in der Zeichnung angedeutet ist, ein Breitband-Funkkanal zur Breitbandsignalübertragung vom Personal Computer PC zur Netzabschlußeinrichtung NT hin vorgesehen. Zur Steuerinformationsübertragung zwischen Netzabschlußeinrichtung NT und Personal Computer PC steht wiederum ein bidirektionaler Schmalband-Leitungskanal im lokalen Stromversorgungsnetz L zur Verfügung.

Zum Aufbau einer Breitbandverbindung zwischen Netzabschlußeinrichtung NT und Breitband-Endgerät und zur sicheren und eindeutigen Zuordnung zwischen der Netzabschlußeinrichtung NT und den zugehörigen Endgeräten kann der über das Lichtnetz L geführte bidirektionale Schmalband-Datenkanal genutzt werden, indem ein Endgerät, beispielsweise der Personal Computer PC, über diesen drahtgebundenen Schmalband-Datenkanal an die Netzabschlußeinrichtung NT meldet, daß ein Breitband-Kanal zwischen Netzabschlußeinrichtung und Endgerät aufgebaut werden soll. Der Schmalband-Datenkanal kann dabei der Einfachheit halber im Halb-Duplex betrieben werden, demzufolge abwechselnd jeweils eine Seite sendet, die andere Seite empfängt, und umgekehrt.

Der lichtnetzgebundene bidirektionale Schmalband-Leitungskanal kann ggf. auch als schmalbandiger Aufwärtskanal zur Datenübertragung für unsymmetrische Dienste, z.B. Videoabruf, genutzt werden, ohne dass dies hier noch näher erläutert werden muss.

Um in einem Szenario mit mehreren benachbarten Teilnehmernetzen eine Übertragung der im Schmalband-Datenkanal übertragenen Signale aus dem (z.B. Wohn-)Bereich des Teilnehmers hinaus und damit ein unbefugtes Mithören durch Dritte zu vermeiden, kann zweckmässigerweise an einer bestimmten Stelle des Hausleitungsnetzes, beispielsweise vor dem Elektrizitätszähler, ein Sperrfilter zur Blockade der Signalübertragung angeordnet sein. Darüberhinaus ist eine noch höhere Datensicherheit dadurch erreichbar, daß die Schmalbandignale digital übertragen und/oder verschlüsselt werden. Da damit der Kanal für Endgeräte anderer Hausnetze nicht zugänglich ist, ist eine eindeutige Zuordnung zwischen Netzabschlußeinrichtung und Breitband-Endgerät gegeben.

Da ein Funksystem im Prinzip ein Punkt-zu-Multipunkt-System darstellt (ein Sender kann viele Empfänger erreichen), sieht man insbesondere in der Aufwärtsrichtung von den Endgeräten (PC) zur Netzabschlußeinrichtung NT ein geeignetes Vielfach-Zugriffsverfahren vor. Hierbei können Zeitmultiplex- und/oder Frequenzmultiplexprinzipien Anwendung finden. Zweckmässigerweise sind die Breitband-Funkkanäle indessen CDMA-Kanäle, d.h. es findet hier eine Spread-Spectrum-Technik (auch Code Division Multiple Access CDMA genannt) Anwendung, derzufolge alle Sender dasselbe Frequenzband benutzen, aber die zu übertragenden Bit in Form von unterschiedlichen Folgen aus Nullen und Einsen (sog. Chips) senden. Die unterschiedlichen Chipfolgen werden dabei so gewählt, daß sie möglichst orthogonal zueinander sind, so daß eine zeitrichtige Korrelation eines derartigen empfangenen Basisbandsignals mit derselben Folge ein Ergebnis ungleich Null liefert, während eine Korrelation mit einer anderen (orthogonalen) Folge einen Wert nahe Null ergibt. Spread-Spectrum-Korrelationsempfänger sind an sich bekannt, so dass es hier keiner näheren Erläuterungen dazu bedarf.

Hat ein Breitband-Endgerät bei der Netzabschlußeinrichtung NT einen von dieser zum Endgerät führenden Breitband-Funkkanal angefordert, so "horcht" die Netzabschlußeinrichtung NT zunächst (durch versuchsweise Korrelation mit einer Serie von orthogonalen Chipfolgen, die als digital gespeicherte Tabelle vorliegen), welche Chipfolgen bereits benutzt werden, bis sie eine nicht benutzte Chipfolge findet. Diese Chipfolge verwendet die Netzabschlußeinrichtung NT zum Aufbau des Breitband-Funkkanals (zeitrichtige Multiplikation jedes Bits mit der Folge und anschließende Modulation) und teilt sie über den lichtnetzgebundenen Schmalband-Leitungskanal auch dem betreffenden Endgerät mit, welches seinerseits das empfangene Signal nach Demodulation in das Basisband durch zeitrichtige Korrelation mit dieser Chipfolge decodieren kann.

Wird auch in Aufwärtsrichtung vom Endgerät zur Netzabschlußeinrichtung NT hin ein Breitband-Funkkanal erforderlich, so kann nach der Einrichtung des Abwärts-Funkkanals der hierzu geschilderte Vorgang nochmals mit vertauschten Rollen ablaufen, d.h. das Endgerät sucht eine nicht benutzte Chipfolge, verwendet diese zur Codierung des Upstream-Signals und gibt gleichzeitig die Information über diese Folge über den lichtnetzgebundenen Schmalbandkanal an die Netzabschlußeinrichtung NT. Für eine Mehrzahl von Aufwärtskanälen von mehreren Endgeräten her enthält die Netzabschlußeinrichtung NT eine entsprechende Mehrzahl von Korrelationsempfängern bzw. einen umschaltbaren Korrelationsempfänger.

Das von der Netzabschlußeinrichtung NT abgegebene Breitband-Funksignal kann in einem Szenario mit mehreren eng benachbarten Teilnehmernetzen möglicherweise auch zu Endgeräten gelangen, die eigentlich mit einer ganz anderen Netzabschlußeinrichtungen verbunden sein sollen. Ebenso kann ein Endgerät ein Funksignal abstrahlen, welches von einer anderen als der zugeordneten Netzabschlußeinrichtung aufgefangen und ausgewertet wird. Dies kann ggf. zu Problemen beim Verbindungsaufbau und bei der Sicherheit gegen unbefugtes Mithören und Mißbrauch. Störungen aus benachbarten Netzen werden zwar durch die Wahl jeweils freier Chipfolgen und durch die begrenzte Reichweite (kleine Sendeleistung) mit hoher Sicherheit vermieden. Um aber auch darüber hinaus ein unbefugtes Mithören durch andere Endgeräte aus benachbarten Haus- bzw. Wohnungsnetzen zu unterbinden, kann das digitale Breitbandsignal zusätzlich verschlüsselt werden. Hierzu eignet sich eine generelle Verschlüsselung von Quelle zu Senke oder - systemspezifisch - eine Verschlüsselung unter Verwendung eines sog. Public Key Systems. Dabei wird jeweils aus einem im Endgerät vorgegebenen geheimen Schlüssel ein öffentlicher Schlüssel ermittelt, der über den lichtnetzgebundenen bidirektionalen Schmalband-Leitungskanal in Aufwärtsrichtung zur Netzabschlußeinrichtung NT übermittelt wird, wo er zum Verschlüsseln des für dieses Endgerät bestimmten Funk-Breitbandsignals benutzt wird.

Public-Key-Verfahren sind an sich (z.B. aus ntz 38 (1985) 9, 636...638) bekannt; sie verwenden zur Schlüsselbildung sog. one-way-Funktionen. Bei one-way-Funktionen handelt es sich um Funktionen, deren Funktionswert relativ einfach zu berechnen ist, während die Berechnung der Inversen kaum möglich ist. "Einfach" und "kaum möglich" meint dabei den rechnerischen Aufwand und hängt somit vom Entwicklungsstand der jeweiligen Computergeneration ab. (Jansen, Pohlmann: "Kryptographie in der Telematik", ntz 38 (1985)9, 636...638):

So beruht ein bekanntes Public-Key-Verfahren beispielsweise darauf, daß es ganz einfach ist, durch Multiplikation einer Anzahl von Primzahlen eine große natürliche Zahl zu errechnen, daß es aber kaum möglich ist, diese große natürliche Zahl wieder in ihre Primfaktoren zu zerlegen (Rivest, Shamir, Adleman: "A method for obtaining digital signatures and public-key cryptosystems", Communications of the ACM 21(1978)2, 120...126). Bei diesem sog. RSA- Verfahren wird aus einem Klartext M ein Schlüsseltext C durch eine mathematische Tranformation

$$C = M^e \text{ (mod n)}$$

erhalten. Die inverse Transformation, mit der man aus dem Schlüsseltext wieder den Klartext erhält, lautet

$$M = C^d \text{ (mod n)}.$$

M ist eine positive ganze Zahl, die zwischen O und n-1 liegen muß. Es ergeben sich dann die Schlüsselpaare (e,n) für den öffentlichen Schlüssel und (d,n) für den geheimen Schlüssel. Bei der Errechnung der Schlüssel wird zunächst n als Produkt aus zwei sehr großen, frei gewählten Primzahlen p und q berechnet (diese Zahlen werden mittels eines Zufallszahlengenerators erzeugt und bleiben geheim):

$$n = p \cdot q, \text{ mit p ungleich q.}$$

Da es zu enormen Schwierigkeiten führt, umgekehrt aus n die Primzahlen p und q zu ermitteln, kann n als Bestandteil des öffentlichen Schlüssels bekanntgegeben werden.

Als geheimer Schlüssel d wird eine große (in ernsthaften Anwendungen ca. 100stellige), frei gewählte ganze Zahl verwendet, die relativ prim zu (p-1)·(q-1) sein muß. Hat man so p, q und d bestimmt, so läßt sich der öffentliche Schlüssel e durch "Inverse Multiplikation":

$$e \cdot d \text{ (mod(p-1)} \cdot \text{(q-1))} = 1 \text{ erzeugen.}$$

Für Primzahlerzeugung und Schlüsselgenerierung existieren spezielle mathematische Algorithmen.

Ein von Zeit zu Zeit vorgenommener Schlüsselwechsel, wie er im Prinzip aus DE 44 35 901 A1 bekannt ist, ist möglich, aber nicht notwendig, was eine Implementierung vereinfacht.

Die vorstehenden, eine Signalverschlüsselung betreffenden Erläuterungen gelten in entsprechender Weise auch für eine Signalverschlüsselung in in Aufwärtsrichtung vom Endgerät zur Netzabschlußeinrichtung NT hin vorgesehenen Breitband-Funkkanälen, ohne dass dies noch weiterer Ausführungen bedarf.

Wollen auch andere Teilnehmerendgeräte Verbindungen mit der selben Netzabschlußeinrichtung NT aufbauen, so geschieht dies in einer den zuvor erläuterten Vorgängen entsprechenden Weise; die Netzabschlußeinrichtung NT moduliert dann aber einen HF-Träger in geeigneter Weise nicht mit nur einem, sondern mit mehreren codierten Signalen.

Das im Vorstehenden erläuterte Teilnehmerendgeräte-Anschlußsystem ist einfach, sicher und kostengünstig zu realisieren, wobei sich beispielsweise folgendes Szenario ergibt:

- bis zu 4 von der Netzabschlußeinrichtung NT zu den Endeinrichtungen führende Abwärtskanäle mit einer Kapazität von jeweils ≤ 4 Mbit/s (4Mbit/s für Video-Verteildienste bzw. 2 Mbit/s für symmetrische Dienste),
- eine entsprechende Zahl von Aufwärtskanälen mit einer Kapazität von jeweils ≤ 64 kbit/s (für unsymmetrische Dienste wie Videoabruf) oder 2 Mbit/s (für symmetrische Dienste),

- Reichweite ≤ 50 m;

dabei können Fehlverbindungen zwischen benachbarten Haus- bzw. Wohnungsnetzen ausgeschlossen und Sicherheit gegen unbefugtes Mithören oder Emulation eines Teilnehmers gewährleistet werden.

**Patentansprüche**

1. Teilnehmerendgeräte-Anschlußsystem mit einer das Teilnehmeranschlußnetz (**AN**) teilnehmerseitig abschliessenden Netzabschlußeinheit (**NT**) und daran angeschlossenen Endgeräten für interaktive Telekommunikationsdienste, **dadurch gekennzeichnet,** **dass** zur Breitbandsignalübertragung von der Netzabschlußeinrichtung (NT) zu einem entsprechenden Endgerät (PC) hin und ggf. zur Breitbandsignalübertragung von einem entsprechenden Endgerät zur Netzabschlußeinrichtung hin Breitband-Funkkanäle in Form von CDMA-Kanälen vorgesehen sind, wobei die zur Decodierung des CDMA-Signals benötigte Information über den jeweils benutzten Code in einem zur Steuerinformationsübertragung zwischen Netzabschlußeinrichtung (NT) und Endgerät (PC) vorgesehenen bidirektionalen Schmalband-Leitungskanal im lokalen Stromversorgungsnetz (L) übertragen wird.

2. Teilnehmerendgeräte-Anschlußsystem nach Anspruch 1, **gekennzeichnet durch** eine zusätzliche Verschlüsselung der Breitbandsignale, wobei die benötigte Schlüsselinformation ebenfalls in dem bidirektionalen Schmalband-Leitungskanal im lokalen Stromversorgungsnetz (L) übertragen wird.

3. Teilnehmerendgeräte-Anschlußsystem nach Anspruch 2, **gekennzeichnet durch** eine Public-Key-Verschlüsselung der Breitbandsignale.

4. Teilnehmerendgeräte-Anschlußsystem nach Anspruch 2 oder 3, **gekennzeichnet durch** einen von Zeit zu Zeit vorgenommenen Schlüsselwechsel.

5. Teilnehmerendgeräte-Anschlußsystem nach einem der Ansprüche 1 bis 4, **dadurch gekennzeichnet,** **dass** die Schmalband-Leitungskanäle Halbduplex-Kanäle sind.

**Claims**

1. Subscriber-terminal access system having a network termination unit (NT), terminating the customer access network (AN) at the subscriber end, and terminals connected to said network termination unit for interactive telecommunication services, **characterized** **in that**, for broadband signal transmission from the network termination device (NT) to a corresponding terminal (PC) and possibly for broadband signal transmission from a corresponding terminal to the network termination device, broadband radio channels in the form of CDMA channels are provided, with the information required for decoding the CDMA signal being transmitted in the local power supply network (L) using the respectively used code in a bidirectional narrowband cableway provided for transmitting control information between the network termination device (NT) and the terminal (PC).

2. Subscriber-terminal access system according to Claim 1, **characterized by** additional encryption of the broadband signals, with the key information required likewise being transmitted in the bidirectional narrowband cableway in the local power supply network (L).

3. Subscriber-terminal access system according to Claim 2, **characterized by** public-key encryption of the broadband signals.

4. Subscriber-terminal access system according to Claim 2 or 3, **characterized by** a change of key performed from time to time.

5. Subscriber-terminal access system according to one of Claims 1 to 4, **characterized** **in that** the narrowband cableways are half-duplex channels.

**Revendications**

1. Système de connexion d'un terminal d'abonné comprenant une terminaison réseau (NT) terminant côté abonné le réseau de connexion d'abonné (AN) et des terminaux connectés à celle-ci pour des services de télécommunication interactifs, **caractérisé en ce que** des voies radio à large bande sous forme de voies CDMA sont prévues pour la transmission de signaux à large bande depuis la terminaison réseau (NT) vers un terminal correspondant (PC) et le cas échéant pour la transmission de signaux à large bande depuis un terminal correspondant jusqu'à la terminaison réseau, l'information nécessaire au décodage du signal CDMA étant transmise via le code utilisé respectivement dans une voie de ligne à bande étroite bidirectionnelle prévue pour la transmission des informations de commande entre la terminaison réseau (NT) et le terminal (PC) dans le réseau d'alimentation électrique local (L).

2. Système de connexion d'un terminal d'abonné selon la revendication 1, **caractérisé par** un chiffrement supplémentaire des signaux à large bande, l'information de codage nécessaire étant également transmise dans la voie de ligne à bande étroite bidirectionnelle dans le réseau d'alimentation électrique local (L).

3. Système de connexion d'un terminal d'abonné selon la revendication 2, **caractérisé par** un chiffrement par clé publique des signaux à large bande.

4. Système de connexion d'un terminal d'abonné selon la revendication 2 ou 3 **caractérisé par** un changement périodique de clé.

5. Système de connexion d'un terminal d'abonné selon l'une des revendications 1 à 4, **caractérisé en ce que** les voies de ligne à bande étroite sont des voies semi-duplex.